# EUROPÄISCHE PATENTSCHRIFT

(11) **EP 1 354 664 B1**
(45) Veröffentlichungstag und Bekanntmachung des Hinweises auf die Patenterteilung: **17.11.2010**
(21) Anmeldenummer: 02008885.2
(22) Anmeldetag: 20.04.2002
(51) Int. Cl.: B23K 26/42, G01N 21/47

(54) **Einrichtung zur Überwachung eines optischen Elements eines Bearbeitungskopfes einer Maschine zur thermischen Bearbeitung eines Werkstücks**
Installation for monitoring an optical element of a working head of a machine for thermal processing of a workpiece
Installation pour la surveillance d'un élément optique d'une machine d'une tête d'usinage d'une machine servant à usiner une pièce

(43) Veröffentlichungstag der Anmeldung: 22.10.2003
(73) Patentinhaber: Haas Laser GmbH & Co. KG, 78713 Schramberg (DE)
(72) Erfinder: Hutt, Jochen, 78713 Schramberg (DE); Flaig, Rainer, 78664 Eschbronn (DE)
(74) Vertreter: Kohler Schmid Möbus

(56) Entgegenhaltungen:
- EP-A- 0 988 916
- DE-A- 3 807 873
- DE-A- 10 040 921
- DE-A- 19 631 059
- DE-A- 19 636 249
- DE-C- 19 839 930
- US-A- 3 571 554
- PATENT ABSTRACTS OF JAPAN vol. 013, no. 473 (M-884), 26. Oktober 1989 (1989-10-26) & JP 01 186296 A (MIYACHI ELECTRIC CO), 25. Juli 1989 (1989-07-25)

## Beschreibung

Die Erfindung betrifft ein system gemäß dem Oberbegriff des Anspruchs 1.

Ein derartiges System ist beispielsweise durch DE 19839930 C bekannt geworden.

Bei der Bearbeitung von Werkstücken mit Hilfe einer Maschine zum thermischen Schweißen oder Schneiden, insbesondere einer Laserbearbeitungsmaschine, kommt es im Bearbeitungsbereich des Werkstücks zu Spritzern und Schmauch. Die Spritzer und der Schmauch können sich auf einer dem Werkstück zugewandten Optikoberfläche eines optischen Elements des Bearbeitungskopfes der Maschine niederschlagen und das optische Element verschmutzten. Spritzer können in die Optikoberfläche eingebrannt werden. Schmauch lagert sich auf der Optikoberfläche ab und lässt sich bis zu einem bestimmten Grad auch wieder von der Optikoberfläche entfernen. Ablagerungen oder Beschädigungen der Optikoberfläche führen zu erhöhter Absorption der Laserstrahlung. Infolgedessen erhöht sich die thermische Belastung des optischen Elements. Dies führt letztlich zu einer spürbaren Minderung der im Bearbeitungsbereich verfügbaren Laserleistung. Bei starker Verschmutzung, insbesondere durch Spritzer, kann die erhöhte Absorption der Laserstrahlung zur Zerstörung des optischen Elements führen.

Daher ist eine frühzeitige Erkennung von Spritzern oder Schmauch auf dem optischen Element notwendig, um eine konstante thermische Leistung im Bearbeitungsbereich des Werkstücks zu gewährleisten und die Zerstörung des optischen Elements zu verhindern, indem die Maschine zur thermischen Bearbeitung rechtzeitig abgeschaltet wird oder eine Reinigung bzw, ein Austausch des optischen Elements angezeigt wird.

Beispielsweise durch die JP 01186296 A ist es bekannt geworden, eine Ablenkung oder Streuung von Laserstrahlen mit Hilfe seitlich des optischen Elements angeordneter Detektoren zu erfassen.

In der DE 198 39 930 C1 ist beschrieben, eine zusätzliche Lichtquelle einzusetzen. Es wird die Intensität eines auf der einen Seite des optischen Elements eingekoppelten und auf der anderen, gegenüberliegenden Seite des optischen Elements austretenden Lichtstrahls der zusätzlichen Lichtquelle nach Art einer Lichtschranke gemessen. Eine Intensitätsabnahme bedeutet eine zunehmende thermische Belastung des optischen Elements. Hierdurch werden vorwiegend innere Materialdefekte wie Risse erkannt.

Weitere bekannte Maßnahmen sind die Überwachung einer beginnenden Zerstörung des optischen Elements durch ein optisches Signal (Lichtblitz) nach der Lehre der EP 0 988 916 A1 oder durch ein akustisches Signal (Knacken) nach der Lehre der DE 196 36 249 A1.

Stand der Technik ist es auch, eine von dem optischen Element ausgehende Wärmestrahlung zu detektierten. Dies ist beispielsweise auch aus der DE 3807873 bekannt. Aufgrund der schlechten Wärmeleitfähigkeit von Glas kann das Schutzglas aber zerstört werden, bevor der Temperaturdetektor anspricht.

Der Erfindung liegt die Aufgabe zugrunde, die Erkennung der Verschmutzung des optischen Elements des Bearbeitungskopfes einer Maschine zur thermischen Bearbeitung eines Werkstücks weiter zu verbessern.

Diese Aufgabe wird durch ein System gemäß Patentanspruch 1 gelöst. Der im Rahmen der Erfindung relevante Bereich des Werkstücks umfasst die Optikoberfläche selbst, das Volumen oder Materialinnere hinter der Oberfläche und auch in diesem Bereich angelagerte oder eingebrannte Partikel. Die Verschmutzung der einem Werkstück zugewandten Optikoberfläche kann unabhängig von den Prozessparametern erkannt und angezeigt werden. Die Überwachung des optischen Elements kann während der Bearbeitung oder auch während der Bearbeitungspause erfolgen.

Durch die Verschmutzung ändert sich das Reflexions- bzw. Brechungsverhalten des optischen Elements. Aus dieser Veränderung kann auf die Verschmutzung der Optikoberfläche geschlossen werden.

Zur Erfassung des reflektierten Lichtstrahls sind zwei Alternativen denkbar, nämlich eine Anordnung des Detektors seitlich zu dem optischen Element oder eine Anordnung im Bereich der dem Werkstück abgewandten Optikoberfläche. Die erste Alternative ermöglicht die Überwachung eines Niederschlags von Spritzern. Die zweite Alternative dient der Überwachung einer Schmauchbildung.

Die Verwendung mehrerer Detektoren und / oder mehrerer Lichtquellen hat den Vorteil, dass größere Bereiche der Optikoberfläche gescannt und kontrolliert werden können.

Bevorzugt ist es, dass eine in einen Bearbeitungskopf der Maschine ein- und aussteckbare Kassette oder Schublade zur Halterung des optischen Elements vorgesehen ist, wobei die Lichtquelle und der Detektor an der Kassette angebracht sind. Dies erleichtert den Austausch des optischen Elements und/oder zugehöriger Elemente zur Überwachung wesentlich.

Auch die Elektronik zur Auswertung der Intensität des reflektierten Lichtstrahls kann an der Kassette angebracht sein. Diese Anbringung wirkt sich vorteilhaft hinsichtlich einer Reduzierung der Störempfindlichkeit des Messverfahrens aus. Die Anordnung ermöglicht auch eine geringe Kabellänge. Die Elektronik kann auch eine Speichereinrichtung für Korrekturdaten / Kennlinien aufweisen.

Lichtquelle, Detektor und Elektronik zur Signalauswertung können eine modulare Einheit bilden, welche als Baugruppe an oder in der Kassette untergebracht und somit dem Bearbeitungskopf als kalibrierbares Modul entnommen bzw. zugeführt werden kann. Beim Einstecken des Moduls werden die erforderlichen elektrischen oder mechanischen Kontakte automatisch durch Steckverbindungen hergestellt.

Zwei bevorzugte Ausführungsbeispiele der Erfindung sind in der Zeichnung schematisch dargestellt und werden nachfolgend mit Bezug zu den Figuren der Zeichnung näher erläutert. Es zeigt:
- **Fig. 1**: das Prinzip einer Anordnung zur Überwachung eines Spritzerniederschlags auf einer Optikoberfläche eines Schutzglases einer Laserbearbeitungsmaschine;
- **Fig. 2**: das Prinzip einer Anordnung zur Überwachung einer Schmauchbildung an einer Optikoberfläche eines Schutzglases einer Laserbearbeitungsmaschine;
- **Fig. 3**: einen Längsschnitt einer Kassette zur Halterung des Schutzglases;
- **Fig. 4**: eine Draufsicht der Kassette nach Fig. 3.

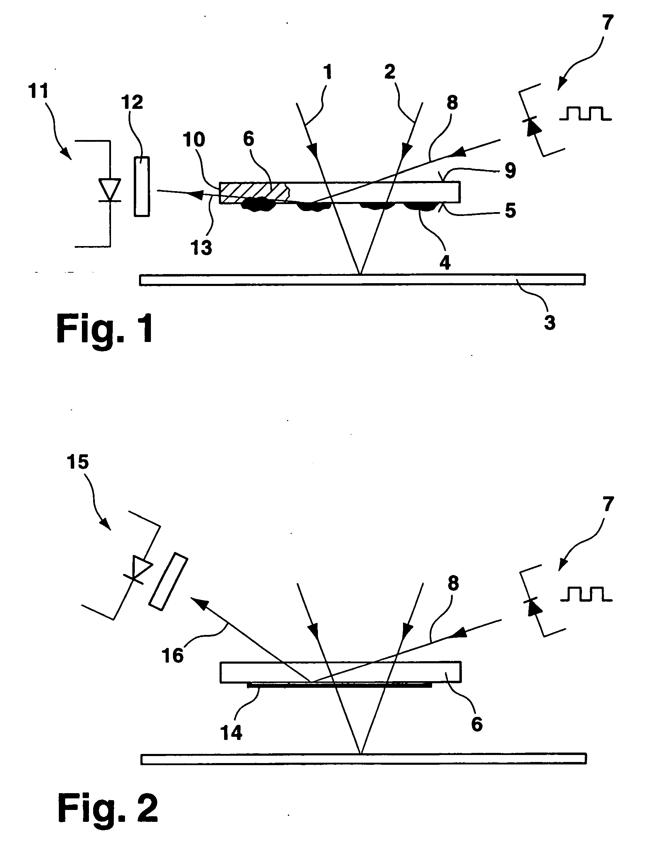

Gemäß **Fig. 1** treffen fokussierte Laserstrahlen **1** und **2** eines YAG-Lasers ausgehend von einem nicht näher gezeigten Bearbeitungskopf einer Laserbearbeitungsmaschine zur Bearbeitung auf ein Werkstück **3**. Bei der Bearbeitung des Werkstücks 3 entstehen Spritzer **4**, welche sich auf einer Optikoberfläche **5** eines optischen Elements niederschlagen und teilweise in die Oberfläche 5 des optischen Elements eingebrannt werden, welches durch ein Schutzglas **6** ausgebildet ist. In Folge der Spritzer 4 wird der Bearbeitungsstrahl geschwächt. Das Bearbeitungsergebnis des Werkstücks 3 verschlechtert sich. Weitere Bauteile des Bearbeitungskopfes würden einer erhöhten Belastung ausgesetzt, sofern die Bearbeitung des Werkstücks trotz angelagerter und/oder eingebrannter Spritzer 4 fortgesetzt wird. Zur Überwachung der Spritzeranlagerung ist eine zusätzliche Lichtquelle **7** vorgesehen, um einen modulierten Lichtstrahl **8** in das Schutzglas 6 einzukoppeln. Die Modulation dient auch der Unterscheidung des Lichtstrahls 8 von den Laserstrahlen 1 und 2. Der an der dem Werkstück 3 abgewandten Optikoberfläche **9** eingekoppelte Lichtstrahl 8 wird zu einer Seitenfläche **10** des Schutzglases 6 gestreut und von einem Detektor **11** erfasst, welchem ein Filter **12** für YAG-Licht vorgeschaltet ist. Die Intensität des gestreuten Lichtstrahls **13** kann als Maß für die Spritzeranlagerung von einer nachgeschalteten Elektronik ausgewertet werden, um die Bearbeitung des Werkstücks bei Überschreiten eines Grenzwertes zu unterbrechen und das Schutzglas 6 auszutauschen oder die erforderliche Reinigung anzuzeigen.

Analog zur Fig. 1, ist aus **Fig. 2** die unterschiedliche Ablenkung des Lichtstrahls 8 der Lichtquelle 7 nach Bildung von Schmauch **14** auf der Optikoberfläche ersichtlich. Auf Grund der Schmauchbildung wird der Lichtstrahl 8 an der Optikoberfläche reflektiert und verlässt das Schutzglas an der gegenüberliegenden Optikoberfläche. Ein entsprechend angeordneter Detektor **15** mit vorgeschaltetem Filter für YAG-Licht kann den reflektierten Lichtstrahl **16** erfassen. Die Intensität des reflektierten Lichtstrahls 16 kann als Maß für die Schmauchbildung von einer nachgeschalteten Elektronik ausgewertet werden, um die Bearbeitung des Werkstücks bei Überschreiten eines Grenzwertes zu unterbrechen und das Schutzglas 6 auszutauschen.

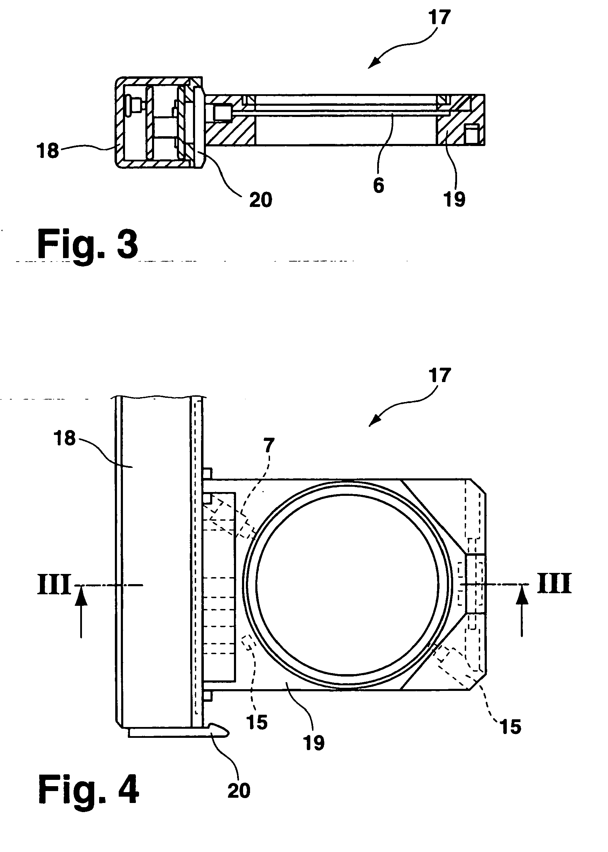

Zum erleichterten Austausch des Schutzglases 6 und der auf das Schutzglas 6 einjustierten Lichtquelle 7 und der Detektoren 11 und 15 ist eine in den Bearbeitungskopf einschiebbare Kassette **17** vorgesehen. Die Kassette 17 besteht im Wesentlichen aus einem Kassettenkopf **18** zum handhabbaren Ein- und Ausstecken der Kassette 17 und einem Kassetteneinschub **19** zur Halterung des Schutzglases 6. Gemäß den **Figuren 3** und **4** zeichnet sich der Kassetteneinschub 19 durch eine Halterung mit einer kreisrunden Fassung oder einem Rahmen für das Schutzglas 6 aus. Nur der Schutzglasrand liegt an der Fassung auf, so dass das Schutzglas 6 nahezu vollständig für Lichtstrahlen durchgängig ist. Das Schutzglas 6 kann in den Kassetteneinschub 19 eingelegt und wieder herausgenommen werden. Zur ortsfesten Fixierung des Schutzglases 6 ist weiterhin eine schwenkbare Klappe zum Einklemmen des seitlichen Schutzglasrandes vorgesehen. An dem Kassetteneinschub 19 sind die Lichtquelle 7 und die Detektoren 11 und 16 einstellbar fixiert. Die gesamte Einheit 17 kann in den Bearbeitungskopf der Laserbearbeitungsmaschine ein- und ausgesteckt werden. Die Kassette 17 kann bis zum Kassettenkopf 18 eingeschoben werden. Eine Sicherung in Gestalt eines Rasthebels **20** arretiert die eingesteckte Kassette 17 in einem Hohlraum des Bearbeitungskopfes.

### BEZUGSZEICHENLISTE

- 1: Laserstrahl
- 2: Laserstrahl
- 3: Werkstück
- 4: Schmauch
- 5: Optikoberfläche
- 6: Schutzglas
- 7: Lichtquelle
- 8: Lichtstrahl
- 9: Optikoberfläche
- 10: Seitenfläche
- 11: Detektor
- 12: Filter
- 13: Lichtstrahl
- 14: Spritzer
- 15: Detektor
- 16: Lichtstrahl
- 17: Kassette
- 18: Kassettenkopf
- 19: Kassetteneinschub
- 20: Rasthebel

## Patentansprüche

1. System, bestehend aus einem Bearbeitungskopf einer Maschine zur thermischen Bearbeitung eines Werkstücks (3), insbesondere einer Laserbearbeitungsmaschine, und einer Einrichtung zur Überwachung eines optischen Elements (6) des Bearbeitungskopfes, das eine dem Werkstück (3) zugewandte (5) und eine dem Werkstück (3) abgewandte Optikoberfläche (9) und einen Detektor (11; 15) zur Erfassung eines im Bereich der dem Werkstück (3) zugewandten Optikoberfläche (5) reflektierten Lichtstrahls (13; 16) aufweist, wobei die Einrichtung eine separate Lichtquelle zur Einkopplung eines Lichtstrahls in das optische Element aufweist, **dadurch gekennzeichnet, dass** die separate Lichtquelle (7) zur Einkopplung eines Lichtstrahls (8) in das optische Element (6) an der dem Werkstück (3) abgewandten Optikoberfläche (9) angeordnet ist.

2. System nach Anspruch 1, **dadurch gekennzeichnet, dass** der Detektor (11) seitlich zu dem optischen Element (6) angeordnet ist.

3. System nach Anspruch 1, **dadurch gekennzeichnet, dass** der Detektor (15) im Bereich der dem Werkstück (3) abgewandten Optikoberfläche (9) angeordnet ist.

4. System nach einem der vorhergehenden Ansprüche, **dadurch gekennzeichnet, dass** mehrere Detektoren (11; 15) und / oder mehrere Lichtquellen (7) vorgesehen sind.

5. System nach einem der vorhergehenden Ansprüche, **dadurch gekennzeichnet, dass** eine in einen Bearbeitungskopf der Maschine ein- und aussteckbare Kassette (17) zur Halterung des optischen Elements (6) vorgesehen ist, wobei die Lichtquelle (7) und der Detektor (11; 15) an der Kassette (17) angebracht sind.

6. System nach Anspruch 5, **dadurch gekennzeichnet, dass** die Elektronik zur Auswertung der Intensität des reflektierten Lichtstrahls an der Kassette (17) angebracht ist.

## Claims

1. System consisting of a processing head of a machine for thermal processing of a workpiece (3), in particular a laser processing machine, and a means for monitoring an optical element (6) of the processing head, which has an optical surface (9) facing (5) the workpiece (3) and one facing away from the workpiece (3), and a detector (11; 15) for detecting a light beam (13; 16) reflected in the area of the optical surface (5) facing the workpiece (3), wherein the means has a separate light source for coupling a light beam into the optical element, **characterized in that** the separate light source (7) for coupling a light beam (8) into the optical element (6) is disposed on the optical surface (9) facing away from the workpiece (3).

2. System according to claim 1, **characterized in that** the detector (11) is disposed on the side of the optical element (6).

3. System according to claim 1, **characterized in that** the detector (15) is disposed in the region of the optical surface (9) facing away from the workpiece (3).

4. System according to any one of the preceding claims, **characterized in that** several detectors (11; 15) and/or several light sources (7) are provided.

5. System according to any one of the preceding claims, **characterized in that** a cartridge (17) which can be inserted into and withdrawn from a processing head of the machine is provided for holding the optical element (6), wherein the light source (7) and the detector (11; 15) are disposed on the cartridge (17).

6. System according to claim 5, **characterized in that** the electronics for evaluating the intensity of the reflected light beam is disposed on the cartridge (17).

## Revendications

1. Système composé d'une tête d'usinage d'une machine destinée à l'usinage thermique d'une pièce (3), en particulier d'une machine d'usinage par laser, et d'un dispositif de surveillance d'un élément optique (6) de la tête d'usinage, qui présente une surface optique (5) tournée vers la pièce (3) et une surface optique (9) éloignée de la pièce (3) ainsi qu'un détecteur (11 ; 15) pour saisir un faisceau lumineux (13 ; 16) réfléchi dans la région de la surface optique (5) tournée vers la pièce (3), le dispositif présentant une source de lumière séparée pour injecter un faisceau lumineux dans l'élément optique, **caractérisé en ce que** la source de lumière séparée (7) pour injecter un faisceau lumineux (8) dans l'élément optique (6) est disposée sur la surface optique (9) éloignée de la pièce (3).

2. Système selon la revendication 1, **caractérisé en ce que** le détecteur (11) est disposé latéralement par rapport à l'élément optique (6).

3. Système selon la revendication 1, **caractérisé en ce que** le détecteur (15) est disposé dans la région de la surface optique (9) éloignée de la pièce (3).

4. Système selon une des revendications précédentes, **caractérisé en ce que** plusieurs détecteurs (11 ; 15) et/ou plusieurs sources de lumière (7) sont prévus.

5. Système selon une des revendications précédentes, **caractérisé en ce qu'**il est prévu une cassette (17) embrochable et débrochable dans une tête d'usinage de la machine pour le maintien de l'élément optique (6), la source de lumière (7) et le détecteur (11 ; 15) étant installés sur la cassette (17).

6. Système selon la revendication 5, **caractérisé en ce que** l'électronique d'évaluation de l'intensité du faisceau lumineux réfléchi est installée sur la cassette (17).
